(19) **Europäisches Patentamt / European Patent Office / Office européen des brevets**

(11) **EP 4 232 874 B1**

(12) **FASCICULE DE BREVET EUROPEEN**

(45) Date de publication et mention de la délivrance du brevet:
**21.01.2026 Bulletin 2026/04**

(51) Classification Internationale des Brevets (IPC):
**G03H 1/00** *(2006.01)*　　**G03H 1/04** *(2006.01)*
**G03H 1/08** *(2006.01)*

(21) Numéro de dépôt: **21807186.8**

(22) Date de dépôt: **19.10.2021**

(52) Classification Coopérative des Brevets (CPC):
**G03H 1/0005; G03H 1/0808; G03H 1/0866;**
G03H 2001/0038; G03H 2001/0447;
G03H 2001/0816; G03H 2001/0883

(86) Numéro de dépôt international:
**PCT/FR2021/051820**

(87) Numéro de publication internationale:
**WO 2022/084619 (28.04.2022 Gazette 2022/17)**

(54) **PROCÉDÉ D'IMAGERIE HOLOGRAPHIQUE NUMÉRIQUE SUPPRIMANT L'IMAGE JUMELLE**

DIGITALE HOLOGRAPHISCHE ABBILDUNGSTECHNIK MIT DOPPELTER BILDELIMINIERUNG

DIGITAL HOLOGRAPHIC IMAGING TECHNIQUE WITH TWIN IMAGE ELIMINATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.10.2020 FR 2010751**

(43) Date de publication de la demande:
**30.08.2023 Bulletin 2023/35**

(73) Titulaires:
• **BIOMERIEUX**
  **69280 Marcy-L'Etoile (FR)**
• **Bioaster**
  **69007 Lyon (FR)**

(72) Inventeurs:
• **SEDAGHAT, Zohreh**
  **69350 LA MULATIERE (FR)**
• **JOSSO, Quentin**
  **69003 LYON (FR)**
• **ROL, Fabian**
  **38290 LA VERPILLIERE (FR)**

(74) Mandataire: **Regimbeau**
  **20, rue de Chazelles**
  **75847 Paris Cedex 17 (FR)**

(56) Documents cités:
• **HATTAY JAMEL ET AL: "Digital in-line particle holography: twin-image suppression using sparse blind source separation", SIGNAL, IMAGE AND VIDEO PROCESSING, SPRINGER LONDON, LONDON, vol. 9, no. 8, 25 May 2014 (2014-05-25), pages 1767 - 1774, XP035537055, ISSN: 1863-1703, [retrieved on 20140525], DOI: 10.1007/S11760-014-0646-3**
• **DONOHO D L: "De-noising by soft-thresholding", IEEE TRANSACTIONS ON INFORMATION THEORY, IEEE PRESS, USA, vol. 41, no. 6, 1 May 1995 (1995-05-01), pages 613 - 627, XP002971195, ISSN: 0018-9448, DOI: 10.1109/18.382009**

## Description

### Domaine technique

La présente invention se rapporte au domaine de l'holographique numérique, et plus précisément traite d'un procédé de suppression d'une image jumelle en imagerie holographique numérique.

### Arrière-plan technologique

L'holographie numérique est un procédé d'enregistrement par un capteur d'un hologramme représentatif de la phase et de l'amplitude de l'onde diffractée par un objet. L'hologramme enregistre la distribution spatiale d'intensité des motifs d'interférence généré par le faisceau d'illumination et la lumière diffractée par l'objet imagé. L'hologramme permet de reconstruire l'image de l'objet par calcul, en utilisant un algorithme de reconstruction numérique. Plus précisément, les caractéristiques de phase et d'absorption de l'objet imagé sont obtenues par calcul de rétropropagation à partir de l'hologramme, en utilisant un algorithme de propagation par exemple basé sur la théorie de la diffraction de Rayleigh Sommerfeld.

L'holographie numérique est particulièrement utilisée en imagerie biologique grâce à sa capacité d'imager des objets transparents, tels que des organismes ou cellules biologiques, et notamment en microscopie holographique numérique. En effet, contrairement à d'autres procédés d'imagerie, l'holographie numérique ne nécessite pas d'injecter des agents colorants pour rendre visibles des objets transparents, ni d'utiliser des rayonnements haute énergie (e.g. rayon x) pouvant endommager les objets biologiques imagés.

L'imagerie holographique vise à retrouver la distribution spatiale de déphasage et d'absorption de l'objet imagé. Ces caractéristiques de l'objet imagé permettent en effet de caractériser précisément l'objet imagé, et permettent ainsi par exemple de l'identifier.

Parmi les différentes méthodes d'holographie, l'holographie en ligne présente une forte sensibilité de phase, et est donc la méthode la plus adaptée pour imager des objets biologiques à faible phase.

Toutefois, l'holographie en ligne présente un inconvénient majeur consistant en la présence d'une image jumelle ou image orthoscopique, résultant de la perte de l'information de phase dans l'hologramme, qui n'enregistre que la seule intensité. L'image jumelle est un artefact qui apparaît dans l'hologramme comme résultant d'un objet imagé supplémentaire disposé symétriquement à l'objet imagé par rapport au plan de l'hologramme. L'image jumelle étant hors focus, elle se traduit, lors de la reconstruction des images de phase et d'absorption, par une distorsion de la forme de l'objet imagé qui peut empêcher l'exploitation de ces images. Digital in-line particle holography: twin-image suppression using sparse blind source separation (Hattay et al., Signal, Image and Video Processing, Nov-2015) propose une technique alternative de suppression de l'image jumelle.

### Présentation de l'invention

L'invention vise à permettre de supprimer les artéfacts dus à la présence d'une image jumelle lors d'une holographie en ligne.

A cet effet, l'invention propose un procédé d'imagerie holographique numérique, comprenant les étapes suivantes :

1) obtention d'un hologramme par holographie, ledit hologramme étant représentatif d'une distribution spatiale d'intensité, sur un plan hologramme à une coordonnée d'hologramme d'un objet imagé, des interférences causés par des interactions entre un faisceau d'illumination et ledit objet imagé placé à une coordonnée objet sur un axe d'imagerie,

2) mise en œuvre d'une pluralité d'itérations comprenant chacune les étapes suivantes:

2.a) par rétropropagation vers la coordonnée objet d'un champ hologramme comprenant une distribution spatiale d'amplitude correspondant à la distribution spatiale d'intensité de l'hologramme et une distribution spatiale de phase, détermination d'un champ objet impliquant une distribution spatiale d'absorption et une distribution spatiale de déphasage de l'objet imagé,

2.b) seuillage des valeurs de la distribution spatiale d'absorption et de la distribution spatiale de déphasage de l'objet imagé en diminuant les valeurs de la distribution spatiale d'absorption inférieures à un seuil d'absorption et en diminuant les valeurs de la distribution spatiale de déphasage inférieures à un seuil de déphasage, le seuil d'absorption et le seuil de déphasage diminuant à chaque itération,

2.c) par re-propagation du champ objet vers la coordonnée hologramme, détermination d'un champ hologramme modifié comprenant une distribution spatiale d'amplitude modifiée et une distribution spatiale de phase modifiée,

2.d) remplacement de la distribution spatiale de phase du champ hologramme par la distribution spatiale de phase modifiée, la distribution spatiale d'amplitude du champ hologramme étant conservée,

3) détermination de la distribution spatiale de déphasage et de la distribution spatiale d'absorption de l'objet imagé comme étant ceux du champ objet de la dernière itération.

L'invention est avantageusement complétée par les différentes caractéristiques suivantes prises seules ou selon leurs différentes combinaisons possibles :

- au cours du seuillage, les valeurs de la distribution spatiale d'absorption inférieure au seuil d'absorption et les valeurs de la distribution spatiale de déphasage inférieure au seuil de déphasage sont fixées à zéro ;
- le seuil d'absorption dépend de valeurs maximales de la distribution spatiale d'absorption, et le seuil de déphasage dépend de valeurs maximales de la distribution spatiale de déphasage impliquées dans le champ objet ;
- lors de la première itération, le seuil d'absorption et/ou le seuil de déphasage correspond à entre 40% et 15 % d'une valeur maximale de la distribution spatiale d'absorption ou de la distribution spatiale de déphasage, respectivement ;
- à chaque itération, le seuil d'absorption et/ou le seuil de déphasage est diminué de 1% à 6% d'une valeur maximale de la distribution spatiale d'absorption ou de la distribution spatiale de déphasage ;
- lors de la dernière itération, le seuil d'absorption et le seuil de déphasage sont à zéro ;
- au cours du seuillage, les valeurs de la distribution spatiale d'absorption et de déphasage sont gardées positives ou nulles au cours des itérations
- avant les itérations, le champ hologramme est normalisé en divisant les valeurs de la distribution spatiale d'intensité par une valeur d'image de fond correspondant à une intensité du faisceau d'illumination à la coordonnée d'hologramme ;
- le seuillage comprend un lissage de la distribution spatiale d'absorption modifiée et de la distribution spatiale de déphasage modifiée ;
- le champ hologramme et/ou le champ objet présentent une résolution spatiale qui croît avec les itérations.

## Présentation des figures

D'autres caractéristiques, buts et avantages de l'invention ressortiront de la description qui suit, qui est purement illustrative et non limitative, et qui doit être lue en regard des dessins annexés sur lesquels :

- la figure 1 est un organigramme illustrant les principales étapes du procédé selon un mode de réalisation possible de l'invention ;
- la figure 2 montre schématiquement un exemple de système d'imagerie holographique utilisé pour acquérir un hologramme selon un mode de réalisation possible de l'invention ;
- la figure 3 montre un hologramme d'un amas de bactéries d'un premier exemple de mise en œuvre du procédé selon un mode de réalisation possible de l'invention,
- la figure 4a montre une distribution spatiale de déphasage initiale déterminée à partir de l'hologramme de la figure 3, dans le premier exemple de mise en œuvre du procédé selon un mode de réalisation possible de l'invention,
- la figure 4b montre une distribution spatiale d'absorption initiale déterminée à partir de l'hologramme de la figure 3, dans le premier exemple de mise en œuvre du procédé selon un mode de réalisation possible de l'invention,
- la figure 4c montre un profil de valeurs de déphasage d'une bactérie dans la figure 4a,
- la figure 4d montre un profil de valeurs d'absorption d'une bactérie dans la figure 4b,
- la figure 5a montre une distribution spatiale de déphasage après la première itération, dans le premier exemple de mise en œuvre du procédé selon un mode de réalisation possible de l'invention,
- la figure 5b montre une distribution spatiale d'absorption après la première itération, dans le premier exemple de mise en œuvre du procédé selon un mode de réalisation possible de l'invention,
- la figure 5c montre un profil de valeurs de déphasage d'une bactérie dans la figure 5a,
- la figure 5d montre un profil de valeurs d'absorption d'une bactérie dans la figure 5b,
- la figure 6a montre une distribution spatiale de déphasage après la cinquième itération, dans le premier exemple de mise en œuvre du procédé selon un mode de réalisation possible de l'invention,
- la figure 6b montre une distribution spatiale d'absorption après la cinquième itération, dans le premier exemple de mise en œuvre du procédé selon un mode de réalisation possible de l'invention,
- la figure 6c montre un profil de valeurs de déphasage d'une bactérie dans la figure 6a,
- la figure 6d montre un profil de valeurs d'absorption d'une bactérie dans la figure 6b,
- la figure 7a montre une distribution spatiale de déphasage après la vingtième itération, dans le premier exemple de mise en œuvre du procédé selon un mode de réalisation possible de l'invention,

- la figure 7b montre une distribution spatiale d'absorption après la vingtième itération, dans le premier exemple de mise en œuvre du procédé selon un mode de réalisation possible de l'invention,
- la figure 7c montre un profil de valeurs de déphasage d'une bactérie dans la figure 7a,
- la figure 7d montre un profil de valeurs d'absorption d'une bactérie dans la figure 7b,
- la figure 8a montre un hologramme de billes de polystyrène acquis par un système d'imagerie dans un second exemple de mise en œuvre du procédé selon un mode de réalisation possible de l'invention,
- la figure 8b montre une photographie des billes de polystyrène du second exemple de mise en œuvre du procédé,
- la figure 9a montre une distribution spatiale de déphasage initiale avant la première itération, déterminée à partir de l'hologramme de la figure 8a, dans le second exemple de mise en œuvre du procédé selon un mode de réalisation possible de l'invention,
- la figure 9b montre une distribution spatiale d'absorption initiale avant la première itération, déterminée à partir de l'hologramme de la figure 8b, dans le second exemple de mise en œuvre du procédé selon un mode de réalisation possible de l'invention,
- la figure 10a montre une distribution spatiale de déphasage après la vingtième itération, dans le second exemple de mise en œuvre du procédé selon un mode de réalisation possible de l'invention,
- la figure 10b montre une distribution spatiale d'absorption après la vingtième itération, dans le second exemple de mise en œuvre du procédé selon un mode de réalisation possible de l'invention.

**Description détaillée**

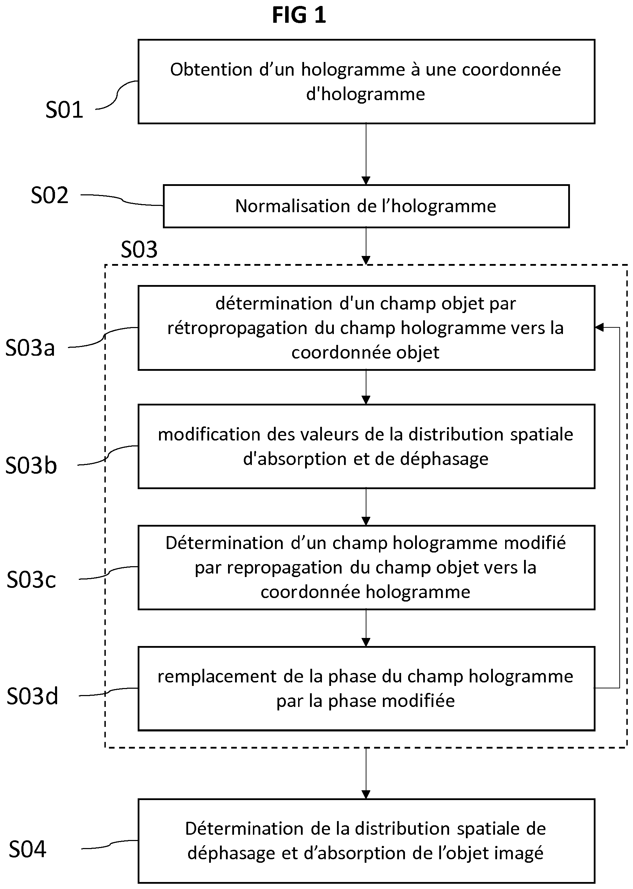

En référence à la **figure 1,** le procédé d'imagerie holographique numérique comprend d'abord l'obtention d'un hologramme d'un objet imagé par holographie (étape S01), typiquement par holographie en ligne. Il n'est pas nécessaire que l'holographie soit en ligne pour mettre en œuvre l'invention, mais c'est dans le cadre de l'holographie en ligne que se pose avec le plus d'acuité le problème de l'image jumelle. L'hologramme peut être obtenu de diverses manières, mais son mode d'obtention n'a pas d'incidence sur le procédé. En particulier, les modalités d'acquisition de l'hologramme peuvent être quelconques, dès lors que l'hologramme est représentatif d'une distribution spatiale d'intensité des interférences de l'objet imagé.

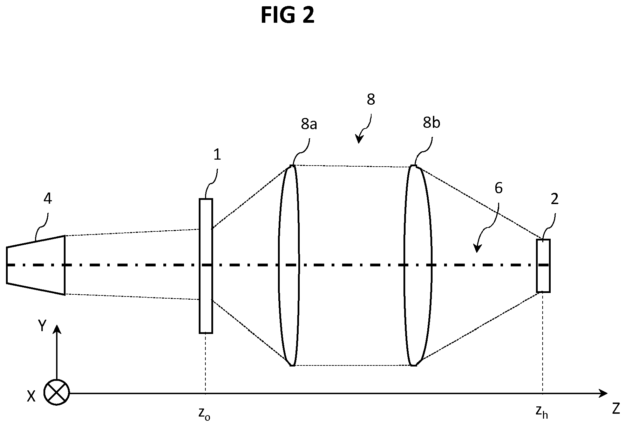

A titre d'exemple non limitatif, la **figure 2** représente schématiquement un système d'imagerie holographique en ligne pour imager un objet 1 au moyen d'un capteur d'image 2 numérique, placé dans un plan image du système d'imagerie holographique. Le système d'imagerie définit un axe d'imagerie 6, simplifié ici par une droite correspondant à l'axe optique mais qui peut consister en un ensemble de droites successives définissant le trajet lumineux, en fonction de la configuration des composants optiques du système d'imagerie. L'objet 1 est placé à une coordonnée objet $z_o$ sur l'axe d'imagerie 6, tandis que le capteur d'image 2 est disposé à une coordonnée d'hologramme $z_h$, et s'étend perpendiculairement à l'axe d'imagerie 6. Il en résulte que l'hologramme est représentatif d'une distribution spatiale d'intensité $H(x,y)$, sur un plan d'hologramme $(x,y)$, des interférences causés par des interactions entre l'objet imagé 1 placé à la coordonnée objet $z_0$ sur un axe d'imagerie 6 et le faisceau d'illumination.

Une source lumineuse 4 est configurée pour illuminer l'objet 1 dans le champ de vue (ou « field-of-view ») du système d'imagerie holographique au moyen d'un faisceau d'illumination de lumière suffisamment cohérente. La source lumineuse 4 peut produire la lumière d'illumination, ou être simplement la terminaison d'une fibre optique acheminant cette lumière d'illumination. Le faisceau d'illumination présente les caractéristiques conventionnelles pour l'imagerie holographique, sans contraintes additionnelles particulières. Le faisceau d'illumination peut ainsi être monochromatique (par exemple avec une longueur d'onde autour de 500 nm) ou possiblement être composé de plusieurs longueurs d'onde, par exemple utilisées l'une après l'autre. Le système d'imagerie holographique est ici muni d'un objectif de microscope 8, schématisé ici par une lentille d'entrée 8a et une lentille de sortie 8b, disposé entre l'échantillon 1 et du capteur d'image numérique 2. L'objectif de microscope 8 est cependant optionnel, l'invention n'étant pas limitée à la microscopie holographique avec lentille. L'arrangement décrit ici est bien entendu un exemple non limitatif. Tout système d'imagerie holographique peut être utilisé, avec ou sans objectif de microscope, etc. Ainsi, dès lors qu'un système d'imagerie holographique peut acquérir une image dans laquelle apparaissent les motifs d'interférence générés par l'objet 1, ce système d'imagerie holographique convient à la mise en œuvre du procédé. Il faut en revanche que les coordonnées objet $z_o$ et les coordonnées d'hologramme $z_h$ qui ont été utilisées pour acquérir l'hologramme obtenu soient connues.

Lors de l'acquisition d'un hologramme, la source lumineuse 4 émet un faisceau d'illumination de référence, qui peut être traduite par une onde plane de référence se propageant dans la direction Z le long de l'axe d'imagerie 6, et qui peut être décrite par :

$$R(z) = A exp(j2\pi z/\lambda)$$

avec A l'amplitude et $\lambda$ la longueur d'onde de l'onde de référence émise par la source lumineuse 4. L'objet 1 est placé à la

coordonnée $z_o$ sur l'axe d'imagerie 6, et par ses propriétés de diffraction, va diffuser la lumière de référence incidente. Il en résulte une onde diffusée par l'objet 1, notée $O(x, y, z)$. L'onde diffusée $O(x, y, z)$ et l'onde de référence $R(z)$ interfèrent sur le capteur d'image 2 pour former l'hologramme, définissant un plan holographique (en x, y) à la coordonnée hologramme $z_h$, qui est celle du capteur d'image 2 sur l'axe d'imagerie 6. Puisqu'un capteur d'image 2 numérique n'est sensible qu'à l'intensité du champ électromagnétique, l'hologramme correspond à la distribution spatiale d'intensité $H(x, y, z_h)$ du champ total à la coordonnée hologramme $z_h$, désigné comme champ hologramme :

$$H(x, y, z_h) = |R(z_h) + O(x, y, z_h)|^2$$

En l'absence d'objet 1, seule l'intensité de l'onde de référence serait détectée en tant que champ hologramme :

$$H(x, y, z_h) = |R(z_h)|^2 = |A|^2 = B(z_h)$$

$B(z_h)$ est appelé l'image de fond à la coordonnée hologramme $z_h$.

L'onde diffusée $O(x, y, z)$ est liée à l'onde incidente $R(z)$ par une fonction de transmission complexe $t(x,y)$ telle que $O(x, y, z)=t(x, y)R(z_o)$, et le champ total $U(x, y, z)$ résultant de l'addition de l'onde diffusée $O(x, y, z)$ et de l'onde de référence $R(z)$ peut s'écrire selon la relation :

$$U(x, y, z_o) = R(z_o)\big(1 + t(x, y)\big).$$

Cette relation peut être réécrite pour traduire le fait que l'onde de référence est modifiée par absorption et déphasage par l'objet 1 :

$$U(x, y, z_o) = R(z_o)\big(1 - a(x, y)exp\big(-j\varphi(x, y)\big)\big)$$

avec $a(x,y)$ représentant l'absorption et $\varphi(x,y)$ représentant le déphasage introduit par l'objet 1, qui découlent directement des caractéristiques de l'objet 1 (structure, composition, etc.). L'absorption a et le déphasage $\varphi$ peuvent donc être considérés également comme des caractéristiques liées à l'objet 1, bien que liées également à certains paramètres tels que la longueur d'onde de l'onde de référence du faisceau d'illumination.

Avant de poursuivre le procédé, il est possible de mettre en œuvre une normalisation (étape S02) de la distribution spatiale d'intensité $H(x,y)$ représentée par l'hologramme, à partir de l'image de fond $B(z_h)$ à la coordonnée hologramme $z_h$. Diviser les valeurs de la distribution spatiale d'intensité $H(x,y)$ par l'image de fond $B(z_h)$, laquelle présente une valeur d'intensité uniforme B, est équivalent à fixer à 1 l'amplitude A de l'onde de référence du faisceau d'illumination, et permet donc de simplifier les calculs. Par la suite, l'amplitude A ne sera donc plus considérée comme différente de 1.

Le procédé comprend ensuite la mise en œuvre d'étapes itératives (étapes S03) visant à déterminer les caractéristiques de phase $\varphi$ et d'absorption a de l'objet imagé 1 par une pluralité de cycles de rétropropagation et re-propagation de champs lumineux, afin de retrouver la phase du champ total, qui n'est pas conservée dans l'hologramme. Au cours de ces cycles, un seuillage de plus en plus poussé est appliqué sur la phase $\varphi$ et l'absorption a, afin de conserver les zones les plus intenses tandis que les autres sont diminuées. Le nombre d'itérations dépend en particulier de la décroissance des seuils appliqués. Typiquement, le nombre d'itérations est d'au moins 8, et de préférence d'au moins 12.

Le champ hologramme, qui correspond à la propagation jusqu'à la coordonnée hologramme $z_h$ du champ objet $U(x,y,z_o)$, est un champ complexe qui comprend la distribution spatiale d'amplitude, qui est traduite par la distribution spatiale d'intensité $H(x, y)$ de l'hologramme, et une distribution spatiale de phase $\Omega(x,y,z_h)$. Le champ hologramme s'écrit donc :

$$U(x, y, z_h) = \sqrt{H(x, y)}exp[j\Omega(x, y, z_h)]$$

Le capteur d'image 2 n'étant sensible qu'à l'intensité du champ électromagnétique, la distribution spatiale de phase $\Omega$ à la coordonnée d'hologramme $z_h$ n'est initialement pas connue, et doit être fixée à une valeur d'initialisation. Elle est avantageusement choisie comme étant la phase $\Omega(z_h)$ de l'onde de référence $R(z_h)$ à la coordonnée d'hologramme $z_h$, estimée par propagation directe :

$$exp(j2\pi z_h/\lambda) = exp(j\Omega(z_h))$$

Ainsi, à partir de l'hologramme, on dispose d'un champ hologramme initial comprenant une distribution spatiale d'amplitude correspondant à la distribution spatiale d'intensité de l'hologramme, et une distribution spatiale de phase initiale à une valeur d'initialisation.

Dans une première étape itérative S03a, un champ objet complexe est déterminé par rétropropagation vers la coordonnée objet $z_o$ du champ hologramme. La rétropropagation fait appel à un modèle de diffraction de la lumière, comme par exemple le modèle de Rayleigh-Sommerfeld ou le modèle de diffraction de Kirchhoff. Un tel modèle de diffraction de la lumière permet, à partir de la connaissance de l'expression champ à un premier point, de déterminer l'expression du champ lumineux à un second point. On peut à cet égard opérer avantageusement dans le domaine fréquentiel, et en particulier utiliser la méthode du spectre angulaire d'une onde plane, qui fait appel à la transformée de Fourier, comme décrit dans l'ouvrage de Joseph W. Goodman, "Introduction to Fourier Optics", McGraw-Hill companies, 3rd edition, 2005.

Dans une deuxième étape itérative S03b, on extrait les valeurs de la distribution spatiale d'absorption a(x,y) et de la distribution spatiale de déphasage φ(x,y) de l'objet imagé 1. Comme indiqué plus haut, le champ objet $U(x,y,z_o)$ implique une distribution spatiale d'absorption a(x,y) et une distribution spatiale de déphasage φ(x,y) de l'objet imagé 1 (ci-dessous et ci-après sous une forme normalisée) :

$$U(x,y,z_o) = exp\left(j\Omega(z_o)\right)\left(1 - a(x,y)exp\left(-j\varphi(x,y)\right)\right)$$

Par une multiplication avec le conjugué de l'onde de référence incidente à l'objet 1, soit par $exp(-j\Omega(z_o))$, on extrait l'absorption a et le décalage φ formant la fonction de transmission complexe. Ces valeurs d'absorption a et de décalage φ résultent de la rétropropagation du champ hologramme vers la coordonnée objet $z_o$, et peuvent être extraite grâce à la présence de l'onde de référence.

Certaines contraintes sont imposées quant aux valeurs possibles de l'absorption a et du décalage de l'objet imagé 1. Tout d'abord, en raison de la conservation de l'énergie, qui implique que l'absorption par l'objet 1 ne doit pas mener à une amplitude lumineuse augmentée suite à une diffraction, il est imposé que les valeurs d'absorption ne doivent pas être négative, soit a(x,y)≥0. Si des valeurs négatives d'absorption surviennent, elles sont le résultat d'interférences entre l'image jumelle et l'onde de référence, et elles sont remplacées par des valeurs nulles. En outre, il est également imposé que le déphasage est positif, soit φ(x,y)≥0. Dans la très grande majorité des cas, l'objet imagé 1 présente en effet, un indice de réfraction supérieur ou égal à celui du milieu de propagation de la lumière. C'est notamment le cas lorsque l'objet imagé 1 est un micro-organisme tel qu'une bactérie dans une solution aqueuse. C'est aussi le cas pour la quasi-totalité des objets dans l'air. Ainsi, les valeurs de la distribution spatiale d'absorption a(x,y) et de déphasage φ(x,y) sont gardées positives ou nulles au cours des itérations.

Une fois extraites, les valeurs de la distribution spatiale d'absorption a(x,y) et de la distribution spatiale de déphasage φ(x,y) de l'objet imagé 1 sont modifiées par seuillage : elles sont modifiées en diminuant les valeurs inférieures à un seuil respectif. Plus précisément, les valeurs de la distribution spatiale d'absorption a(x,y) inférieures à un seuil d'absorption sont diminuées, tandis que les valeurs de la distribution spatiale de déphasage φ(x,y) inférieures à un seuil de déphasage sont diminuées. Les valeurs de la distribution spatiale d'absorption a(x,y) supérieures au seuil d'absorption ne sont pas diminuées, et les valeurs de la distribution spatiale de déphasage φ(x,y) supérieures au seuil de déphasage ne sont pas diminuées. Les valeurs de la distribution spatiale d'absorption a(x,y) inférieures au seuil d'absorption et de la distribution spatiale de déphasage φ(x,y) inférieures au seuil de déphasage sont diminuées fortement, de plus de 50%, de préférence de plus de 75%, et de préférence encore sont fixées à zéro.

Les valeurs des seuils décroissent à chaque itération. De préférence, le seuil d'absorption dépend des valeurs de la distribution spatiale d'absorption a(x,y), et le seuil de déphasage dépend des valeurs de la distribution spatiale de déphasage φ(x,y). De préférence, le seuil d'absorption dépend des valeurs maximales de la distribution spatiale d'absorption a(x,y), et de préférence de la valeur maximale prise par la distribution spatiale d'absorption a(x,y). De même, le seuil de déphasage dépend des valeurs maximales de la distribution spatiale de déphasage φ(x,y), et de préférence de la valeur maximale prise par la distribution spatiale de déphasage φ(x,y). En particulier, la valeur du seuil d'absorption peut correspondre à une proportion de la valeur maximale prise par la distribution spatiale d'absorption a(x,y), proportion qui décroit à chaque itération. De même, la valeur du seuil de déphasage peut correspondre à une proportion de la valeur maximale prise par la distribution spatiale de déphasage φ(x,y), proportion qui décroit à chaque itération. Il est bien entendu possible que la proportion soit également définie à partir de plusieurs valeurs des distributions spatiales, par exemple en tant que proportion d'une moyenne ou autre indicateur.

A titre d'exemple, lors de la première itération, le seuil d'absorption pour la distribution spatiale d'absorption a(x,y) et/ou le seuil de déphasage pour la distribution spatiale de déphasage φ(x,y) de l'objet imagé correspond à entre 40% et 15 % de la valeur maximale de la distribution spatiale d'absorption a(x,y) ou de la distribution spatiale de déphasage φ(x,y), respectivement, et de préférence correspond à entre 30% et 20 % de la valeur maximale de la distribution spatiale d'absorption a(x,y) ou de la distribution spatiale de déphasage φ(x,y), respectivement. Puis, à chaque itération, le seuil est diminué de 2% à 6% de la valeur maximale de la distribution spatiale d'absorption a(x,y) ou de la distribution spatiale de déphasage φ(x,y). Lors de la dernière itération, le seuil pour la distribution spatiale d'absorption a(x,y) est à zéro et le seuil pour la distribution spatiale de déphasage φ(x,y) de l'objet imagé est à zéro. Les valeurs initiales des seuils, ainsi que leur décroissance à chaque itération, dépendent notamment de la nature de l'objet imagé 1, et peuvent donc y être adaptées. Comme indiqué plus haut, le nombre d'itérations dépend essentiellement des valeurs initiales des seuils, ainsi que de leur décroissance à chaque itération. La décroissance des seuils peut être régulière ou irrégulière.

Dans la mesure où le bruit causé par l'image jumelle est toujours moins intense que la représentation de l'objet imagé dans l'hologramme, le seuillage retire plus de contribution de l'image jumelle que de la représentation de l'objet imagé. En effet, par définition, l'objet imagé est dans le champ objet au focus, tandis que l'image jumelle est hors focus.

Après application du seuillage, on obtient une distribution spatiale d'absorption modifiée a'(x,y) et une distribution spatiale de déphasage modifiée φ'(x,y), qui définissent donc un champ objet complexe modifié U'(x,y,z_o) :

$$U(x, y, z_o) = exp\left(j\Omega(z_o)\right)\left(1 - a'(x,y)exp\left(-j\varphi'(x,y)\right)\right)$$

De préférence, la seconde étape itérative comprend un lissage de la distribution spatiale d'absorption modifiée et de la distribution spatiale de déphasage modifiée, typiquement par application d'un filtrage passe-bas, par exemple un filtrage gaussien ou équivalent. Le lissage permet d'éviter la génération de composants haute fréquence au niveau des coupures causées par le seuillage. De préférence, la taille du filtre de lissage (c'est-à-dire les pixels adjacents pris en compte simultanément lors du filtrage) est diminuée au fur et à mesure des itérations, par exemple en même temps que la diminution des seuils. Cela permet de retrouver les contrastes importants de l'objet imagé à la fin des itérations.

Dans une troisième étape itérative (étape S03c), un champ hologramme modifié U'(x,y,z_h) est déterminé par re-propagation du champ objet modifié U'(x,y,z_o) vers la coordonnée hologramme z_h. La re-propagation suit les mêmes modalités que la rétropropagation évoquée plus haut, et peut ainsi faire appel à un modèle de diffraction de la lumière, comme par exemple le modèle de Rayleigh-Sommerfeld ou le modèle de diffraction de Kirchhoff. Le champ hologramme modifié U'(x,y,z_h) résultant comprend une amplitude modifiée et une phase modifiée Ω'(x,y,z_h), qui reflète les modifications apportées à l'absorption et au déphasage de l'objet imagé 1 lors de l'étape précédente de seuillage. Seule la phase modifiée est exploitée dans l'étape suivante.

Dans une quatrième étape itérative (étape S03d), la phase du champ hologramme Ω(x,y,z_h) est remplacé par la phase modifiée Ω'(x,y,z_h), tandis que l'amplitude du champ hologramme est conservée. Ou dit autrement, le champ hologramme modifié U'(x,y,z_h) devient le champ hologramme, avec un remplacement de la distribution spatiale d'amplitude modifiée par la distribution spatiale d'amplitude initiale. En effet, il est rappelé que l'hologramme est représentatif d'une distribution spatiale d'intensité H(x,y) correspondant à la distribution spatiale d'amplitude du champ hologramme U(x,y,z_h). Il en résulte que la distribution spatiale d'amplitude du champ hologramme U(x,y,z_h) est déterminée par l'hologramme, et n'a pas à être modifiée. En revanche, la phase du champ hologramme Ω(x,y,z_h) n'est pas fixée, et est mise à jour à chaque itération.

A la suite de cette quatrième étape itérative (étape S03d), le champ hologramme a donc eu sa distribution spatiale de phase Ω(x,y,z_h) mise à jour, et une nouvelle itération peut commencer par la première étape itérative (étape S03a), avec toutefois un seuil d'absorption et un seuil de décalage diminués par rapport à l'itération précédente. Les cycles d'itérations prennent fin lorsqu'un critère est rempli, comme par exemple lorsque le seuil d'absorption et/ou le seuil de décalage sont nuls, ou au moins sous une valeur seuil. Il est également possible de fixer un nombre d'itérations, le critère étant alors que le nombre fixé d'itérations a été atteint.

A la suite des itérations, les valeurs de la distribution spatiale de déphasage et d'absorption de l'objet imagé sont déterminés (étape S04) comme étant ceux résultant d'une dernière itération. Plus précisément, les valeurs de la distribution spatiale de déphasage et d'absorption de l'objet imagé sont celles correspondant au dernier champ objet obtenu par rétropropagation vers la coordonnée objet du dernier champ hologramme.

Lors de chaque itération, des valeurs d'absorption et de déphasage sont obtenues. Ces valeurs sont toutefois entachées de bruit, provenant essentiellement de l'image jumelle. Le seuillage permet la conservation des contributions les plus importantes, tandis que les contributions les moins significatives, polluées par le bruit, sont progressivement éliminées. Le bruit est donc réduit à chaque itération. Par rapport aux procédés existants, le procédé selon l'invention présente l'avantage de converger rapidement, et de supprimer totalement le bruit dû à l'image jumelle.

Le procédé, par la diminution progressive des seuils, peut être interprété comme retirant d'abord le bruit causé par l'image jumelle au niveau des zones les plus diffusantes, ignorant tous les détails. Puis, comme les seuils diminuent, des informations sont ensuite récupérées en provenance d'éléments moins diffusants. Il est donc possible de tirer parti de cette récupération progressive des détails pour accélérer la vitesse du procédé, en travaillant d'abord avec un champ hologramme et/ou un champ objet basse résolution, puis en augmentant cette résolution au fur et à mesure des itérations, par exemple en même temps que les seuils sont diminués. En effet, au début des itérations, l'image est approximée par les seules zones les plus diffusantes, tandis qu'avec la baisse progressive des seuils, des détails de plus en plus fins sont récupérés, justifiant l'augmentation de la résolution. A la fin des itérations, les champs peuvent retrouver la même résolution que l'hologramme initial. Appliquer les itérations sur des champs à plus faible résolution permet d'accélérer fortement la vitesse du procédé.

Le procédé est particulièrement adapté à l'imagerie biologique, dans laquelle l'objet imagé est un échantillon biologique acquis par microscopie holographique. En effet, les objets d'origine biologique présentent généralement une absorption positive et des déphasages avec des contours bien définis. L'imagerie biologique est donc l'application privilégiée du procédé. Le procédé peut fonctionner toutefois avec d'autres types d'objets que des objets biologiques.

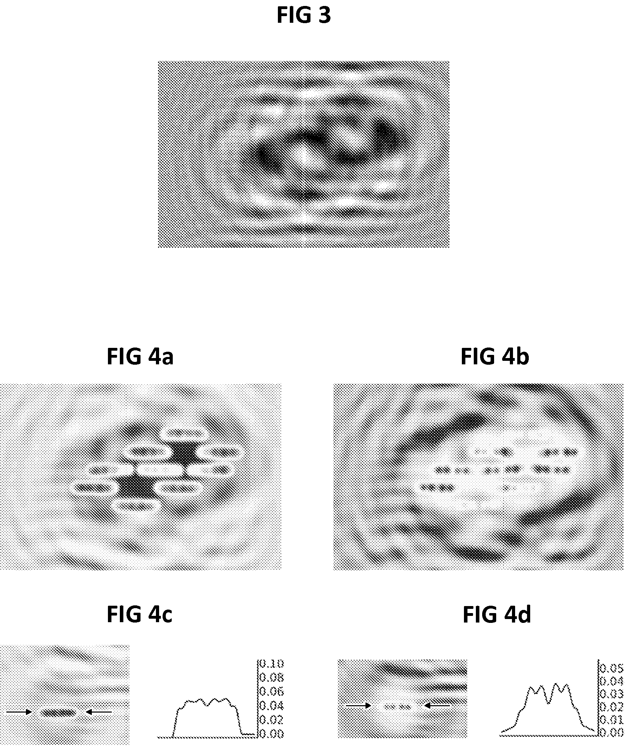

Afin d'illustrer les effets des itérations, les figures 2 à 5d montrent un premier exemple de mise en œuvre de ces itérations sur un hologramme généré par ordinateur d'un groupe d'objets représentant une micro-colonie de bactéries en forme de bâtonnets. La **figure 3** montre l'hologramme original généré par ordinateur, à partir de la distribution spatiale d'intensité H(x,y) enregistrée par le capteur d'image 2. Comme on peut le constater, l'image jumelle induite par le groupe distord fortement les formes des bactéries individuelles le composant. Ces bactéries se présentent sous forme de bâtonnets renfermant un alignement de quatre structures internes diffusantes. Les bactéries présentent une absorption de 0,02, et un déphasage $\varphi$ de 0,08, avec les structures internes diffusantes présentant une absorption maximale de 0,05 et un déphasage maximal de 0,1.

La **figure 4a** montre la distribution spatiale de déphasage correspondant au champ objet initial de la figure 3, après rétropropagation du champ hologramme vers la coordonnée objet, tandis que la **figure 4b** montre la distribution spatiale d'absorption correspondant au champ objet initial de la figure 3, après rétropropagation du champ hologramme vers la coordonnée objet. La **figure 4c** montre le profil de la distribution des valeurs de déphasage dans l'axe longitudinal d'une bactérie en bâtonnet, entre les deux flèches. On constate qu'en raison du bruit important dû à l'image jumelle, le profil de déphasage est assez plat et culmine à environ 0,05, soit la moitié du déphasage maximal. Le bruit empêche donc de discerner et de caractériser les quatre structures internes diffusantes dans la bactérie. La **figure 4d** montre le profil de la distribution des valeurs d'absorption dans l'axe longitudinal d'une bactérie en bâtonnet, entre les deux flèches. On constate qu'en raison du bruit important dû à l'image jumelle, le profil d'absorption culmine à environ 0,04, soit la moitié de l'absorption maximal. Le bruit empêche donc de caractériser les quatre structures internes diffusantes dans la bactérie.

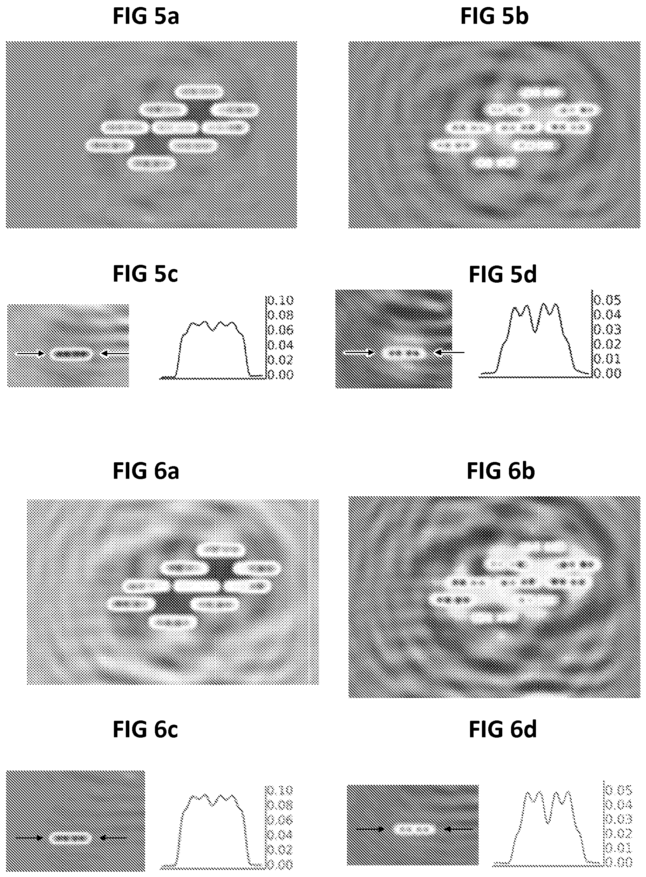

La **figure 5a** montre la distribution spatiale de déphasage et la **figure 5b** montre la distribution spatiale d'absorption, après la première itération. Dans cet exemple, les seuils initiaux ont été choisis à 25% des valeurs maximales. La **figure 5c** montre le profil de la distribution des valeurs de déphasage dans l'axe longitudinal d'une bactérie en bâtonnet, entre les deux flèches. Par rapport au profil précédent de la figure 4c, les valeurs maximales du profil de déphasage ont nettement augmenté, s'établissant désormais à environ 0,07. La **figure 5d** montre le profil de la distribution des valeurs d'absorption dans l'axe longitudinal d'une bactérie en bâtonnet, entre les deux flèches. Par rapport au profil précédent de la figure 4d, les valeurs maximales du profil d'absorption ont augmenté, passant à environ 0,05.

La **figure 6a** montre la distribution spatiale de déphasage et la **figure 6b** montre la distribution spatiale d'absorption, après la cinquième itération. Les seuils d'absorption et de déphasage ont été progressivement réduits à chaque itération. La **figure 6c** montre le profil de la distribution des valeurs de déphasage dans l'axe longitudinal d'une bactérie en bâtonnet, entre les deux flèches. Par rapport au profil précédent de la figure 5c, les valeurs maximales du profil de déphasage ont encore nettement augmenté, s'établissant désormais à environ 0,09. Toutefois, les différences de valeurs entre les structures internes diffusantes et la bactérie sont encore faibles. La **figure 6d** montre le profil de la distribution des valeurs d'absorption dans l'axe longitudinal d'une bactérie en bâtonnet, entre les deux flèches. Par rapport au profil précédent de la figure 5d, les différences de valeurs entre les structures internes diffusantes et la bactérie ont été accentuées.

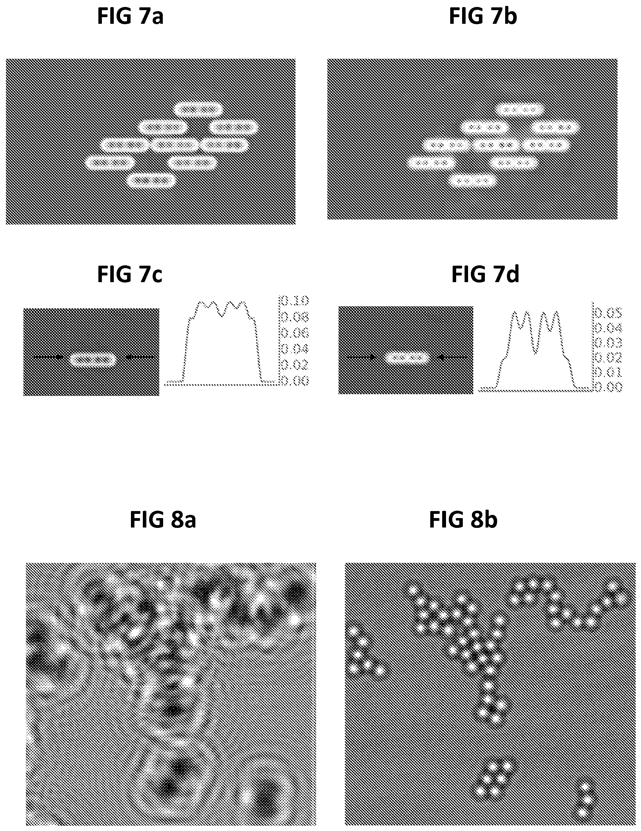

La **figure 7a** montre la distribution spatiale de déphasage et la **figure 7b** montre la distribution spatiale d'absorption, après la vingtième et dernière itération. Les seuils d'absorption et de déphasage ont été progressivement réduits à chaque itération jusqu'à être à zéro dans cette dernière itération. La **figure 7c** montre le profil de la distribution des valeurs de déphasage dans l'axe longitudinal d'une bactérie en bâtonnet, entre les deux flèches. Par rapport au profil précédent de la figure 6c, les valeurs maximales du profil de déphasage ont augmenté, s'établissant désormais à environ 0,10. En outre, les différences de valeurs entre les structures internes diffusantes et la bactérie ont été accentuées, les valeurs d'absorption de la bactérie s'approchant désormais de 0,08. On retrouve donc bien les valeurs réelles de distribution spatiale d'absorption de l'objet imagé. La **figure 7d** montre le profil de la distribution des valeurs d'absorption dans l'axe longitudinal d'une bactérie en bâtonnet, entre les deux flèches. Par rapport au profil précédent de la figure 6d, les différences de valeurs entre les structures internes diffusantes et la bactérie ont été encore accentuées. Désormais, les valeurs maximales correspondant aux structures internes diffusantes atteignent 0,05, tandis que les valeurs minimales correspondant à la bactérie atteignent 0,02. On retrouve donc bien les valeurs réelles de distribution spatiale d'absorption de l'objet imagé.

Le procédé permet donc, avec seulement 20 itérations dans cet exemple, de supprimer complètement le bruit et de retrouver les valeurs exactes de déphasage et d'absorption des bactéries, y compris leurs structures internes diffusantes. Dans la mesure où le seuillage élimine plus de contributions de l'image jumelle que de l'objet imagé, la convergence sera d'autant plus rapide que la zone spatiale mise à zéro à la fin des itérations est large. La convergence est donc plus rapide lorsque la région d'intérêt de l'image est réduite. Si l'agrégat de la figure 3 avait contenu plus de bactéries, c'est-à-dire plus d'objet d'intérêt à imager, le nombre d'itérations aurait dû être choisi plus grand pour retrouver les valeurs exactes de déphasage et d'absorption, par exemple avec une diminution moins rapide des seuils.

Les **figures 8a à 10b** montrent un exemple de mise en œuvre du procédé sur des données expérimentales. Des billes de polystyrène de 1,1 $\mu$m de diamètre ont été disposées aléatoirement sur une lame en faisant sécher une suspension colloïdale, puis en les immergeant dans l'huile, et l'hologramme de la **figure 8a** a été acquis. Les billes de polystyrène présentent un déphasage important, mais une très faible absorption. A titre d'exemple non-limitatif, le système d'imagerie holographique utilisé pour acquérir l'hologramme de cet exemple est un système de microscopie holographique en ligne, avec une LED monochromatique à 405 nm en tant que source lumineuse 4, avec une largeur à mi-hauteur de 12 nm. La source lumineuse 4 était placée à 100 nm de la lame. Le système d'imagerie holographique comprenait un objectif de microscope 8, avec une ouverture numérique de 100x1,3 pour un agrandissement de 80. Un capteur CMOS a été utilisé en tant que capteur d'image 2. Les billes présentaient un indice de réfraction d'environ 1,63, et l'huile d'immersion un indice de réfraction d'environ 1,53. La **figure 8a** montre l'hologramme après normalisation par l'image de fond. A titre de comparaison, la **figure 8b** montre une image non holographique des billes dans la même configuration.

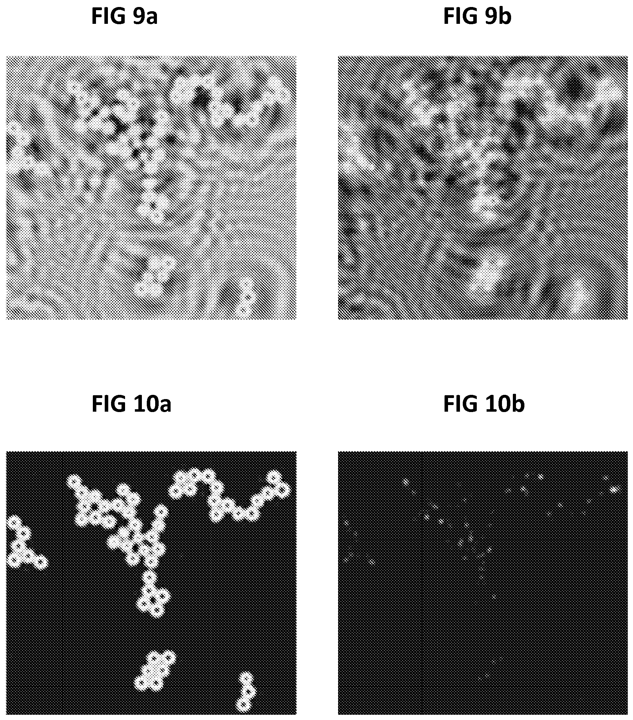

De manière similaire aux figures 2a et 2b, la **figure 9a** montre la distribution spatiale de déphasage correspondant à l'hologramme initial de la figure 8a, après rétropropagation du champ hologramme vers la coordonnée objet, tandis que la **figure 9b** montre la distribution spatiale d'absorption correspondant à l'image originale de la figure 8a, après rétropropagation du champ hologramme vers la coordonnée objet. On constate ici encore que les distributions spatiales de déphasage et d'absorption sont très fortement bruitées par l'image jumelle. En particulier, la distribution spatiale d'absorption montre de fortes fluctuations, alors mêmes que les billes sont censées présenter une faible absorption.

Comme expliqué plus haut, une pluralité de cycles d'itérations sont mis en œuvre. La **figure 10a** montre la distribution spatiale de déphasage et la **figure 10b** montre la distribution spatiale d'absorption, après la cinquantième et dernière itération. Les seuils d'absorption et de déphasage ont été progressivement réduits à chaque itération jusqu'à être à zéro dans cette dernière itération. On constate d'une part que la distribution spatiale de déphasage correspond désormais nettement à la distribution des billes telles qu'illustrée sur la figure 8b. D'autre part, les faibles valeurs de la distribution spatiale d'absorption reflètent correctement le caractère peu absorbant des billes de polystyrène. Le bruit causé par l'image jumelle a donc été efficacement éliminé, et les valeurs les distributions spatiales de déphasage et d'absorption ont été correctement déterminées.

L'invention n'est pas limitée au mode de réalisation décrit et représenté aux figures annexées. Des modifications restent possibles, notamment du point de vue de la constitution des divers caractéristiques techniques ou par substitution d'équivalents techniques, sans sortir pour autant du domaine de protection de l'invention telle que revendiquée dans les revendications annexées.

**Revendications**

**1.** Procédé d'imagerie holographique numérique, comprenant les étapes suivantes :

1) obtention (S01) d'un hologramme par holographie, ledit hologramme étant représentatif d'une distribution spatiale d'intensité, sur un plan hologramme à une coordonnée d'hologramme ($z_h$) d'un objet imagé (1), des interférences causés par des interactions entre un faisceau d'illumination et ledit objet imagé placé à une coordonnée objet ($z_0$) sur un axe d'imagerie (6),

2) mise en œuvre d'une pluralité d'itérations (S03) comprenant chacune les étapes suivantes:

2.a) par rétropropagation vers la coordonnée objet d'un champ hologramme comprenant une distribution spatiale d'amplitude correspondant à la distribution spatiale d'intensité de l'hologramme et une distribution spatiale de phase, détermination (S03a) d'un champ objet impliquant une distribution spatiale d'absorption et une distribution spatiale de déphasage de l'objet imagé,

2.b) seuillage (S03b) des valeurs de la distribution spatiale d'absorption et de la distribution spatiale de déphasage de l'objet imagé en diminuant les valeurs de la distribution spatiale d'absorption inférieures à un seuil d'absorption et en diminuant les valeurs de la distribution spatiale de déphasage inférieures à un seuil de déphasage, le seuil d'absorption et le seuil de déphasage diminuant à chaque itération,

2.c) par re-propagation du champ objet vers la coordonnée hologramme, détermination (S03c) d'un champ hologramme modifié comprenant une distribution spatiale d'amplitude modifiée et une distribution spatiale de phase modifiée,

2.d) remplacement (S03d) de la distribution spatiale de phase du champ hologramme par la distribution spatiale de phase modifiée, la distribution spatiale d'amplitude du champ hologramme étant conservée,

3) détermination de la distribution spatiale de déphasage et de la distribution spatiale d'absorption de l'objet imagé comme étant ceux du champ objet de la dernière itération.

2. Procédé selon la revendication 1, dans lequel au cours du seuillage, les valeurs de la distribution spatiale d'absorption inférieure au seuil d'absorption et les valeurs de la distribution spatiale de déphasage inférieure au seuil de déphasage sont fixées à zéro.

3. Procédé selon l'une quelconque des revendications précédentes, dans lequel le seuil d'absorption dépend de valeurs maximales de la distribution spatiale d'absorption, et le seuil de déphasage dépend de valeurs maximales de la distribution spatiale de déphasage impliquées dans le champ objet.

4. Procédé selon l'une quelconque des revendications précédentes, dans lequel lors de la première itération, le seuil d'absorption et/ou le seuil de déphasage correspond à entre 40% et 15 % d'une valeur maximale de la distribution spatiale d'absorption ou de la distribution spatiale de déphasage, respectivement.

5. Procédé selon l'une quelconque des revendications précédentes, dans lequel à chaque itération, le seuil d'absorption et/ou le seuil de déphasage est diminué de 1% à 6% d'une valeur maximale de la distribution spatiale d'absorption ou de la distribution spatiale de déphasage.

6. Procédé selon l'une quelconque des revendications précédentes, dans lequel lors de la dernière itération, le seuil d'absorption et le seuil de déphasage sont à zéro.

7. Procédé selon l'une quelconque des revendications précédentes, dans lequel au cours du seuillage, les valeurs de la distribution spatiale d'absorption et de déphasage sont gardées positives ou nulles au cours des itérations.

8. Procédé selon l'une quelconque des revendications précédentes, dans lequel avant les itérations, le champ hologramme est normalisé en divisant les valeurs de la distribution spatiale d'intensité par une valeur d'image de fond correspondant à une intensité du faisceau d'illumination à la coordonnée d'hologramme.

9. Procédé selon l'une quelconque des revendications précédentes, dans lequel le seuillage comprend un lissage de la distribution spatiale d'absorption modifiée et de la distribution spatiale de déphasage modifiée.

10. Procédé selon l'une quelconque des revendications précédentes, dans lequel le champ hologramme et/ou le champ objet présentent une résolution spatiale qui croît avec les itérations.

**Patentansprüche**

1. Verfahren zur digitalen holographischen Bildgebung mit den folgenden Schritten:

1) Erhalten (S01) eines Hologramms durch Holographie, wobei das Hologramm eine räumliche Intensitätsverteilung in einer Hologrammebene an einer Hologrammkoordinate ($z_h$) eines abgebildeten Objekts (1) darstellt, wobei Interferenzen durch Wechselwirkungen zwischen einem Beleuchtungsstrahl und dem abgebildeten Objekt verursacht werden, das an einer Objektkoordinate ($z_0$) auf einer Bildgebungsachse (6) angeordnet ist, 2) Ausführen von mehreren Iterationen (S03) mit jeweils den folgenden Schritten:

2.a) durch Rückwärtsausbreitung eines Hologrammfeldes mit einer räumlichen Amplitudenverteilung, die der räumlichen Intensitätsverteilung des Hologramms entspricht, und einer räumlichen Phasenverteilung, zur Objektkoordinate, Bestimmen (S03a) eines Objektfeldes, das eine räumliche Absorptionsverteilung und eine räumliche Phasenverschiebungsverteilung des abgebildeten Objekts beinhaltet, 2.b) Schwellenwertbildung (S03b) der Werte der räumlichen Absorptionsverteilung und der räumlichen Phasenverschiebungsverteilung des abgebildeten Objekts durch Vermindern der Werte der räumlichen Absorptionsverteilung, die geringer sind als ein Absorptionsschwellenwert, und durch Vermindern der Werte der räumlichen Phasenverschiebungsverteilung, die geringer sind als ein Phasenverschiebungsschwellenwert, wobei der Absorptionsschwellenwert und der Phasenverschiebungsschwellenwert bei jeder Iteration abnehmen,

2.c) durch erneute Ausbreitung des Objektfeldes zur Hologrammkoordinate Bestimmung (S03c) eines modifizierten Hologrammfeldes mit einer modifizierten räumlichen Amplitudenverteilung und einer modifizierten räumlichen Phasenverteilung,

2.d) Ersetzen (S03d) der räumlichen Phasenverteilung des Hologrammfeldes durch die modifizierte räumliche Phasenverteilung, wobei die räumliche Amplitudenverteilung des Hologrammfeldes beibehalten wird,

3) Bestimmen der räumlichen Phasenverschiebungsverteilung und der räumlichen Absorptionsverteilung des abgebildeten Objekts als jene des Objektfeldes der letzten Iteration.

2. Verfahren nach Anspruch 1, bei dem im Verlauf der Schwellenwertbildung die Werte der räumlichen Absorptionsverteilung, die geringer sind als der Absorptionsschwellenwert, und die Werte der räumlichen Phasenverschiebungsverteilung, die geringer sind als der Phasenverschiebungsschwellenwert, auf null festgelegt werden.

3. Verfahren nach einem der vorhergehenden Ansprüche, bei dem der Absorptionsschwellenwert von Maximalwerten der räumlichen Absorptionsverteilung abhängt und der Phasenverschiebungsschwellenwert von Maximalwerten der räumlichen Phasenverschiebungsverteilung, die im Objektfeld enthalten sind, abhängt.

4. Verfahren nach einem der vorhergehenden Ansprüche, bei dem bei der ersten Iteration der Absorptionsschwellenwert und/oder der Phasenverschiebungsschwellenwert zwischen 40 % und 15 % eines Maximalwerts der räumlichen Absorptionsverteilung bzw. der räumlichen Phasenverschiebungsverteilung entsprechen.

5. Verfahren nach einem der vorhergehenden Ansprüche, bei dem bei jeder Iteration der Absorptionsschwellenwert und/oder der Phasenverschiebungsschwellenwert um 1 % bis 6 % eines Maximalwerts der räumlichen Absorptionsverteilung oder der räumlichen Phasenverschiebungsverteilung vermindert wird.

6. Verfahren nach einem der vorhergehenden Ansprüche, bei dem bei der letzten Iteration der Absorptionsschwellenwert und der Phasenverschiebungsschwellenwert auf null liegen.

7. Verfahren nach einem der vorhergehenden Ansprüche, bei dem im Verlauf der Schwellenwertbildung die Werte der räumlichen Absorptions- und Phasenverschiebungsverteilung im Verlauf der Iterationen positiv oder null gehalten werden.

8. Verfahren nach einem der vorhergehenden Ansprüche, bei dem vor den Iterationen das Hologrammfeld durch Dividieren der Werte der räumlichen Intensitätsverteilung durch einen Hintergrundbildwert, der einer Intensität des Beleuchtungsstrahls an der Hologrammkoordinate entspricht, normiert wird.

9. Verfahren nach einem der vorhergehenden Ansprüche, bei dem die Schwellenwertbildung eine Glättung der modifizierten räumlichen Absorptionsverteilung und der modifizierten räumlichen Phasenverschiebungsverteilung umfasst.

10. Verfahren nach einem der vorhergehenden Ansprüche, bei dem das Hologrammfeld und/oder das Objektfeld eine räumliche Auflösung aufweisen, die mit den Iterationen zunimmt.

## Claims

1. A digital holographic imaging method, comprising the following steps:

1) obtaining (S01) a hologram by holography, said hologram being representative of a spatial intensity distribution, in a hologram plane at a hologram coordinate ($z_h$) of an imaged object (1), of the interference caused by interactions between an illumination beam and said imaged object placed at an object coordinate ($z_0$) on an imaging axis (6),
2) implementing (S03) a plurality of iterations, each comprising the following steps:

2.a) by back-propagation to the object coordinate of a hologram field comprising a spatial amplitude distribution corresponding to the spatial intensity distribution of the hologram and a spatial phase distribution, determining (S03a) an object field containing a spatial absorption distribution and a spatial phase-shift distribution of the imaged object,

2.b) thresholding (S03b) the values of the spatial absorption distribution and of the spatial phase-shift distribution of the imaged object by decreasing the values of the spatial absorption distribution below an absorption threshold and by decreasing the values of the spatial phase-shift distribution below a phase-shift threshold, the absorption threshold and the phase-shift threshold decreasing with each iteration,

2.c) by re-propagation of the object field to the hologram coordinate, determining (S03c) a modified hologram field comprising a modified spatial amplitude distribution and a modified spatial phase distribution,

2.d) replacing (S03d) the spatial phase distribution of the hologram field with the modified spatial phase distribution, the spatial amplitude distribution of the hologram field being retained,

3) determining the spatial phase-shift distribution and the spatial absorption distribution of the imaged object as being those of the object field of the last iteration.

2. The method as claimed in claim 1, wherein, during thresholding, the values of the spatial absorption distribution below the absorption threshold and the values of the spatial phase-shift distribution below the phase-shift threshold are set to zero.

3. The method as claimed in any one of the preceding claims, wherein the absorption threshold depends on maximum values of the spatial absorption distribution, and the phase-shift threshold depends on maximum values of the spatial phase-shift distribution contained in the object field.

4. The method as claimed in any one of the preceding claims, wherein, in the first iteration, the absorption threshold and/or the phase-shift threshold corresponds to between 40% and 15% of a maximum value of the spatial absorption distribution or spatial phase-shift distribution, respectively.

5. The method as claimed in any one of the preceding claims, wherein, in each iteration, the absorption threshold and/or the phase-shift threshold is decreased by 1% to 6% of a maximum value of the spatial absorption distribution or spatial phase-shift distribution.

6. The method as claimed in any one of the preceding claims, wherein, in the last iteration, the absorption threshold and the phase-shift threshold are set to zero.

7. The method as claimed in any one of the preceding claims, wherein, during thresholding, the values of the spatial absorption and phase-shift distribution are kept positive or zero during the iterations.

8. The method as claimed in any one of the preceding claims, wherein, before the iterations, the hologram field is normalized by dividing the values of the spatial intensity distribution by a background image value corresponding to an intensity of the illumination beam at the hologram coordinate.

9. The method as claimed in any one of the preceding claims, wherein the thresholding comprises smoothing the modified spatial absorption distribution and the modified spatial phase-shift distribution.

10. The method as claimed in any one of the preceding claims, wherein the hologram field and/or the object field have a spatial resolution that increases with the iterations.

**FIG 1**

S01 — Obtention d'un hologramme à une coordonnée d'hologramme

S02 — Normalisation de l'hologramme

S03

S03a — détermination d'un champ objet par rétropropagation du champ hologramme vers la coordonnée objet

S03b — modification des valeurs de la distribution spatiale d'absorption et de déphasage

S03c — Détermination d'un champ hologramme modifié par repropagation du champ objet vers la coordonnée hologramme

S03d — remplacement de la phase du champ hologramme par la phase modifiée

S04 — Détermination de la distribution spatiale de déphasage et d'absorption de l'objet imagé

**FIG 2**

**FIG 3**

**FIG 4a**

**FIG 4b**

**FIG 4c**

**FIG 4d**

**FIG 5a**

**FIG 5b**

**FIG 5c**

**FIG 5d**

**FIG 6a**

**FIG 6b**

**FIG 6c**

**FIG 6d**

**FIG 7a**

**FIG 7b**

**FIG 7c**

**FIG 7d**

**FIG 8a**

**FIG 8b**

**FIG 9a**

**FIG 9b**

**FIG 10a**

**FIG 10b**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **HATTAY et al.** *Signal, Image and Video Processing*, November 2015

- **JOSEPH W. GOODMAN**. Introduction to Fourier Optics. McGraw-Hill companies, 2005